# EUROPEAN PATENT SPECIFICATION

(11) **EP 3 067 663 B1**
(45) Date of publication and mention of the grant of the patent: **23.08.2017**
(21) Application number: 16156894.4
(22) Date of filing: 23.02.2016
(51) Int. Cl.: G01D 5/04, G01D 5/12, G01D 5/14, F16H 59/02, F16H 59/10

(54) **POSITION DETECTING DEVICE**
POSITIONSDETEKTIONSVORRICHTUNG
DISPOSITIF DE DÉTECTION DE POSITION

(30) Priority: 25.02.2015 JP 2015035225
(43) Date of publication of application: 14.09.2016
(73) Proprietor: Alps Electric Co., Ltd., Tokyo 145-8501 (JP)
(72) Inventor: Wakita, Yoshitsugu, Tokyo, Tokyo 145-8501 (JP)
(74) Representative: Schmitt-Nilson Schraud Waibel Wohlfrom Patentanwälte Partnerschaft mbB

(56) References cited:
- DE-A1-102009 015 883
- DE-U1-202007 000 210
- JP-A- 2007 062 664
- JP-A- 2007 302 070
- US-A1- 2014 352 476

## Description

The present invention relates to a position detecting device that is used for an operation for switching a travel mode of an automobile and the like.

This application claims benefit of Japanese Patent Application No. 2015-035225 filed on February 25, 2015, which is hereby incorporated by reference.

A position detecting device for an operation lever of a vehicle detects the position of the operation lever that is supported so as to be capable of oscillating in two directions orthogonal to each other.

In the position detecting device, a first actuating member is rotated and a signal output of a shifting operation is obtained from first detection means when the operation lever is oscillated in one direction a (a longitudinal direction of a vehicle).

Further, when the operation lever is oscillated in the other direction b (a width direction of the vehicle), a second actuating member is rotated and a signal output of a selecting operation is obtained from second detection means.

In the position detecting device for the operation lever in the related art, only one of the first actuating member and the second actuating member is driven when the operation lever is operated.

Incidentally, in the above-mentioned position detecting device for the operation lever in the related art, an output is obtained from only one of the first detection means and the second detection means as the operation lever is operated from a home position. For this reason, for example, there is a problem in that abnormality cannot be detected even though any abnormality is generated on the second detection means when the first detection means is actuated. Accordingly, two first detection means and two second detection means have been provided in the related art so as to be capable of detecting the position of the operation lever even though abnormalities are generated on one first detection means and one second detection means.

However, when two first detection means and two second detection means are used as described above, there is a problem in that the device is increased in size and price.

The present invention provides a position detecting device that can detect the position of an operation body with high reliability by a small and inexpensive structure.

A position detecting device according to an aspect of the invention detects an oscillating position of an operation body supported so as to be capable of oscillating in a first direction and a second direction. The position detecting device includes a driven member that is moved so as to follow the oscillation of the operation body in the first and the second directions, a first rotor and a second rotor that are rotated so as to follow the driven member, and detection units that detect the rotation of the first and second rotors. The driven member rotates both the first and second rotors so as to follow the oscillation of the operation body in either direction of the first and second directions.

According to this structure, since the first and second rotors are rotated so as to follow the oscillation of the operation body in either direction of the first and second directions, both the first and second rotors are rotated when the operation body oscillates in either direction of the first and second directions (the position of the operation body is switched). Accordingly, when only one of the first and second rotors is rotated, it is possible to determine that the rotor, which is not rotated, is out of order. Therefore, although the numbers of rotors and detection units can be reduced in half as compared to the related art, erroneous determination can be avoided. As a result, the position detecting device can be reduced in size and price.

The driven member of the position detecting device according to the aspect of the invention preferably includes a first engaging portion and a second engaging portion that are moved so as to follow the oscillation of the operation body in the first and second directions. The first rotor preferably includes a third engaging portion that is engaged with the first engaging portion and is rotated by torque applied to the third engaging portion from the first engaging portion. The second rotor preferably includes a fourth engaging portion that is engaged with the second engaging portion and is rotated by torque applied to the fourth engaging portion from the second engaging portion. The first and second rotors are preferably rotated so as to follow the oscillation of the operation body in both the first and second directions.

According to this structure, the rotation of the first and second rotors is made to follow the oscillation of the operation body by an engagement relationship between the first engaging portion, which follows the oscillation of the operation body in the first and second directions, and the third engaging portion of the first rotor and an engagement relationship between the second engaging portion, which follows the oscillation of the operation body in the first and second directions, and the fourth engaging portion of the second rotor. Accordingly, since the position detecting device can be realized with a simple structure, the position detecting device is reduced in size and price.

The first and second engaging portions of the aspect of the invention preferably apply torque to portions thereof, which are engaged with the third and fourth engaging portions, so as to follow the oscillation of the operation body in both the first and second directions.

The first and second engaging portions of the aspect of the invention are preferably rotated along rotation loci so as to follow the oscillation of the operation body in the first direction, and are linearly moved along linear loci so as to follow the oscillation of the operation body in the second direction. The first and second engaging portions are preferably disposed at rotational positions, which correspond to the position of the operation body in the first direction, on the rotation loci and linear positions, which correspond to the position of the operation body in the second direction, on the linear loci. The driven member is preferably in a posture unique to the rotational positions and the linear positions of the first and second engaging portions. The first and second rotors are preferably disposed at rotation angles unique to the posture of the driven member.

According to this structure, the first and second engaging portions are adapted to be disposed at rotational positions, which correspond to the position of the operation body in the first direction, on the rotation loci and linear positions, which correspond to the position of the operation body in the second direction, on the linear loci. According to this structure, it is possible to dispose the first and second engaging portions at positions, which are unique to the oscillating position of the operation body, by a simple structure.

The position detecting device according to the aspect of the invention preferably further includes a support member that supports the driven member so that the driven member is rotatable and linearly movable relative to the first and second rotors in a direction orthogonal to rotation axes of the first and second rotors. The driven member is preferably engaged with a driving body extending from the operation body, and preferably includes a guide portion that guides the movement of the driven member relative to the support member along the linear loci while the driven member is rotatable in the direction orthogonal to the rotation axes. The first and second engaging portions are preferably positioned so as to be line-symmetric with respect to the guide portion. The first engaging portion is preferably engaged with the third engaging portion so that an engagement position where the first engaging portion and the third engaging portion are engaged with each other is movable in the direction orthogonal to the rotation axes. The second engaging portion is preferably engaged with the fourth engaging portion so that an engagement position where the second engaging portion and the fourth engaging portion are engaged with each other is movable in the direction orthogonal to the rotation axes.

According to this structure, since the first and second rotors can be rotated so as to follow the oscillation of the operation body in the first and second directions by a simple structure, the position detecting device is reduced in size and price.

The first and second engaging portions of the position detecting device according to the aspect of the invention are preferably rotated so as to follow the oscillation of the operation body in the first and second directions. The first and second engaging portions are preferably disposed at positions, which correspond to the positions of the operation body in the first and second directions, in the direction orthogonal to the rotation axes. The first engaging portion is preferably capable of moving an engagement position where the first engaging portion and the third engaging portion are engaged with each other in the direction orthogonal to the rotation axes, and rotates the first rotor so that the third engaging portion follows the movement of the first engaging portion in the direction orthogonal to the rotation axes. The second engaging portion is preferably capable of moving an engagement position where the second engaging portion and the fourth engaging portion are engaged with each other in the direction orthogonal to the rotation axes, and rotates the second rotor so that the fourth engaging portion follows the movement of the second engaging portion in the direction orthogonal to the rotation axes.

According to this structure, since the first and second rotors can be rotated so as to follow the oscillation of the operation body in the first and second directions by a simple structure, the position detecting device is reduced in size and price.

The position detecting device according to the aspect of the invention preferably further includes determination means for determining the position of the operation body on the basis of detection signals output from the detection units.

According to this structure, the position of the operation body can be determined by the determination means.

The first and second rotors of the position detecting device according to the aspect of the invention are preferably supported so that rotation centers of the first and second rotors are parallel to each other, and a fixed part including the detection units faces both the first and second rotors. Magnets, which are magnetized with different magnetic poles in a direction normal to the rotation of the first and second rotors, are preferably provided on one of the first and second rotors and the fixed part facing the first and second rotors, and magnetism detection units, which detect the rotation of the magnets, are preferably disposed on the other thereof.

According to this structure, the rotational positions of the first and second rotors can be detected with high accuracy by a simple structure.

According to the aspect of the invention, it is possible to provide a position detecting device that can detect the position of an operation body with high reliability by a small and inexpensive structure.
Fig. 1 is a perspective view showing the overall structure of a position detecting device according to a first embodiment of the invention.
Fig. 2 is an exploded perspective view showing the internal structure of the position detecting device according to the first embodiment of the invention.
Fig. 3 is an exploded perspective view of a support mechanism that supports an operation lever so as to allow the operation lever to be capable of oscillating.
Fig. 4 is a view showing the support mechanism that supports the operation lever so as to allow the operation lever to be capable of oscillating, and is a partial cross-sectional view taken along line IV-IV of Fig. 3.
Fig. 5 is a view showing the postures of a driven member, a first rotor, and a second rotor at operating positions (1) to (5) of the operation lever 1 shown in Fig. 1.
Fig. 6 is a cross-sectional view showing the first rotor, the second rotor, and detection units.
Fig. 7 is a view illustrating a relationship between operating positions (1) to (5) and the outputs of first and second detection units.
Fig. 8 is an exploded perspective view showing the internal structure of a position detecting device according to a second embodiment of the invention.

Position detecting devices according to embodiments of the invention will be described below.

### First embodiment

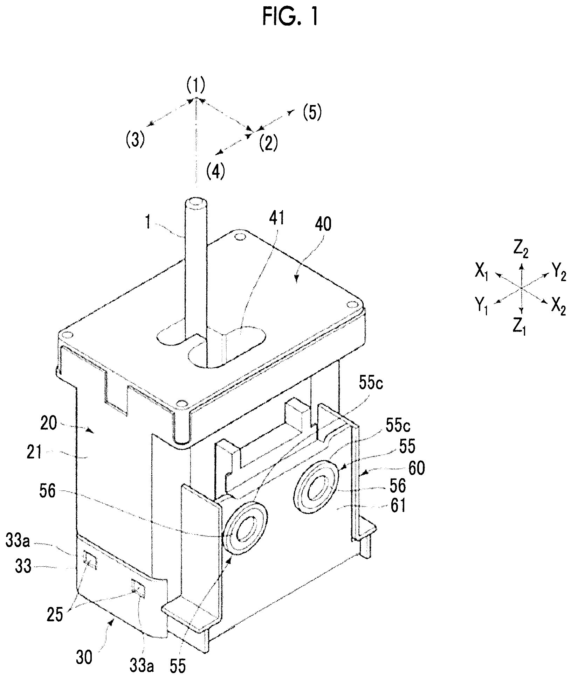

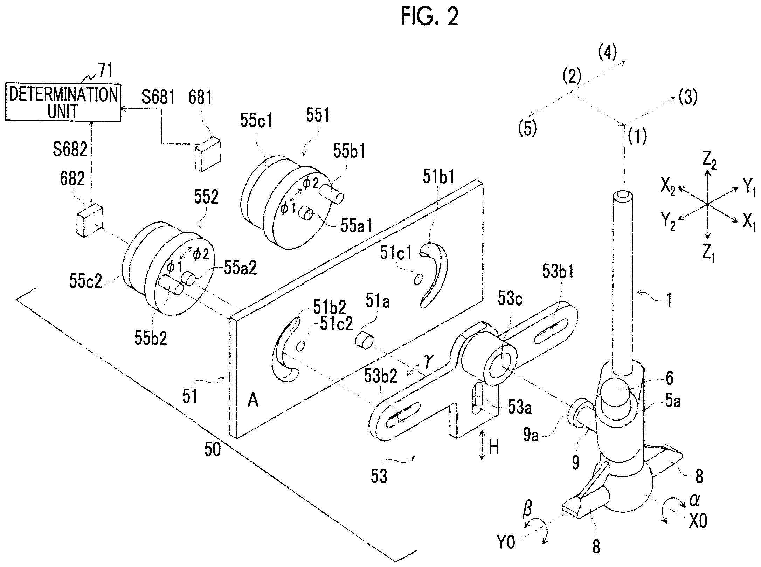

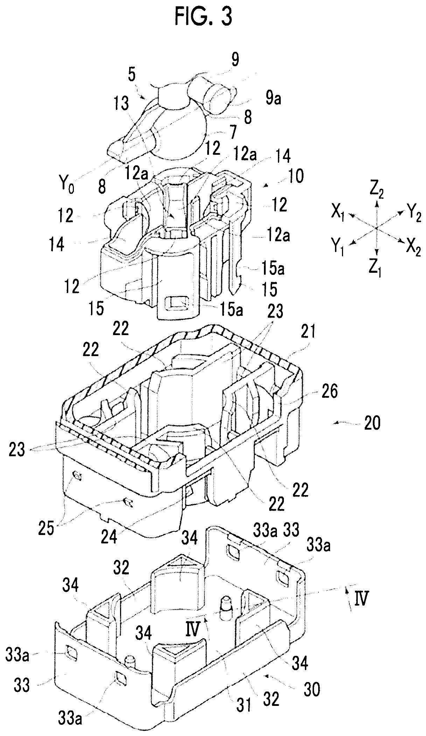

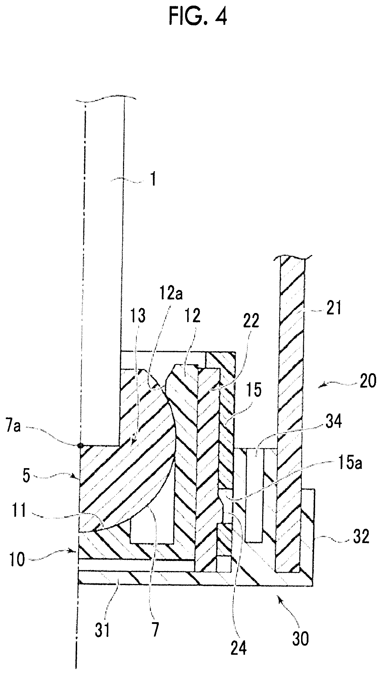

Fig. 1 is a perspective view showing the overall structure of a position detecting device according to a first embodiment of the invention. Fig. 2 is an exploded perspective view showing the internal structure of the position detecting device according to the first embodiment of the invention. Fig. 3 is an exploded perspective view of a support mechanism that supports an operation lever so as to allow the operation lever to be capable of oscillating. Fig. 4 is a view showing the support mechanism that supports the operation lever so as to allow the operation lever to be capable of oscillating, and is a partial cross-sectional view taken along line IV-IV of Fig. 3.

All of Figs. 1 to 3 are perspective views. Figs. 1 and 3 are perspective views seen in the same direction, but Fig. 2 shows the position detecting device from a viewpoint that is rotated about a Z axis from the viewpoint of Figs. 1 and 3 by an angle of 180.

As shown in Fig. 1, the position detecting device according to the embodiment of the invention includes an operation lever 1. The operation lever 1 is supported so as to be capable of oscillating in a Y1-Y2 direction that is a first direction and an X1-X2 direction that is a second direction. In Fig. 2, an oscillating direction corresponding to the first direction is represented by an α direction and an oscillating direction corresponding to the second direction is represented by a β direction.

Even though the operation lever 1 of the position detecting device according to this embodiment oscillates in either direction of the first and second directions, a first rotor 551 and a second rotor 552 are rotated by a support member 51 and a driven member 53 so as to follow the oscillation of the operation lever 1.

Specifically, the driven member 53 includes linear guide holes 53b1 and 53b2 (first and second engaging portions) that are moved so as to follow the oscillation of the operation lever 1 in the first and second directions.

The first rotor 551 includes a protrusion 55b1 (a third engaging portion) that is engaged with the linear guide hole 53b1, and is rotated by torque applied to the protrusion 55b1 from the linear guide hole 53b1. Further, the second rotor 552 includes a protrusion 55b2 (a fourth engaging portion) that is engaged with the linear guide hole 53b2, and is rotated by torque applied to the protrusion 55b2 from the linear guide hole 53b2.

According to this structure, when operating positions (1) to (5) are switched, both detection signals S681 and S682 of detection units 681 and 682 are changed. When only one of the detection signals S681 and S682 is changed, a determination unit 71 can determine that the detection unit 681 or 682 corresponding to the unchanged detection signal is out of order. For this reason, since the numbers of rotors and detection units can be reduced in half as compared to the related art, the position detecting device can be reduced in size and price.

The position detecting device according to this embodiment and the peripheral structure of the operation lever 1 will be described below in detail.

As shown in Figs. 2 and 3, a base molding body 5, which is made of a synthetic resin, is formed integrally with a base of the operation lever 1. The base molding body 5 is supported by a first support 10 so as to be capable of oscillating, and the first support 10 is fixed to a second support 20 and a third support 30. In Fig. 3, the second support 20 is cut in the middle thereof and only a bottom structure of the second support 20 is shown. However, as shown in Fig. 1, the second support 20 includes a body 21 that is long in a vertical direction, and a cavity is formed in the body 21.

As shown in Fig. 1, an upper opening of the body 21 of the second support 20 is closed by a guide member 40. A bottom opening of the second support 20 is closed by a third support 30. The body 21 of the second support 20, the guide member 40, and the third support 30 form a first housing; and the base molding body 5 of the operation lever 1 and the first support 10 are received in the first housing.

As shown in Fig. 1, a guide hole 41 is formed at the guide member 40, which is a part of the first housing, so as to pass through the guide member 40 in the vertical direction. The operation lever 1 extends to the upper side of the first housing so as to pass through the inside of the guide hole 41. An oscillating angle of the operation lever 1 is determined by the length of the guide hole 41, and the operating positions, which are set by the movement of the operation lever 1, are determined by the shape of the guide hole 41.

As shown in Figs. 1 and 2, in the position detecting device according to the embodiment, the operating positions, which are set by the oscillation of the operation lever 1, are five positions (1), (2), (3), (4), and (5). The switching between the operating positions (1) and (2) is performed by the oscillation of the operation lever 1 in the second direction (X1-X2: the β direction). The switching between the operating positions (1) and (3) and the switching between the operating positions (2) and (4), or the switching between the operating positions (2) and (5) are performed by the oscillation of the operation lever 1 in the first direction (Y1-Y2: the α direction).

The position detecting device according to this embodiment generates a signal for switching a travel mode of an automobile; and a forward mode, a parade mode, and a brake mode of the automobile are set by the switching of the operating position.

The operating position (1) is a home position. As shown in Fig. 2, a bottomed hole 5a is formed in the base molding body 5 of the base of the operation lever 1 and a return pin 6 is inserted into the hole 5a so as to be capable of protruding. The return pin 6 is biased in a protruding direction by a return spring that is received in the hole 5a. A return cam surface is formed on the lower surface of the guide member 40 shown in Fig. 1, and the return pin 6 is pressed against the return cam surface by a biasing force of the return spring. When an operating force applied to the operation lever 1 is removed after the operation lever 1 is moved to a position other than the home position (1), the operation lever 1 is always returned to the home position (1) by the shape of the return cam surface.

As shown in Figs. 2 and 3, a spherical sliding surface 7 is formed integrally with the base molding body 5. The spherical sliding surface 7 is a part of a spherical surface. A center 7a of curvature (see Fig. 4) of the spherical sliding surface 7 is positioned on the axis of the operation lever 1. A first axis X0 and a second axis Y0, which pass through the center 7a of curvature of the spherical surface and are orthogonal to the axis of the operation lever 1, are shown in Fig. 2. The first axis X0 extends in the X1-X2 direction and the second axis Y0 extends in the Y1-Y2 direction.

As shown in Fig. 2, shaft bodies 8 and 8, which extend from the spherical sliding surface 7, are formed integrally with the base molding body 5. The axes of the shaft bodies 8 and 8 correspond to the second axis Y0.

In Fig. 4, for the simplification of description, only the spherical sliding surface 7 of the base molding body 5, which is formed at the base of the operation lever 1, is shown and the structure of the base molding body 5 other than the spherical sliding surface 7 is omitted. The first support 10 shown in Figs. 3 and 4 is integrally formed of a synthetic resin material.

As shown in Fig. 4, a sliding support portion 11 is formed at the bottom of the first support 10 and a lower end portion of the spherical sliding surface 7 comes into sliding contact with the sliding support portion 11. The sliding support portion 11 is a part of a concave spherical surface, and the radius of curvature of the concave spherical surface is substantially the same as the radius of curvature of the spherical sliding surface 7. The sliding support portion 11 may be formed so as to include not the concave spherical surface but sliding protrusions that come into contact with the spherical sliding surface 7 at a plurality of points. However, when the sliding support portion 11 is formed of a concave spherical surface, it is easy to prevent local wear, which is caused by sliding, from occurring on the spherical sliding surface 7 and the sliding support portion 11.

As shown in Figs. 3 and 4, four elastic holding portions 12 are formed integrally with the first support 10. A lower end portion of each of the elastic holding portions 12 is integrated with the bottom of the first support 10, and each of the elastic holding portions 12 extends upward. The four elastic holding portions 12 face each other with a holding space 13 interposed therebetween. Holding sliding portions 12a, which protrude toward the holding space 13, are formed on opposite portions of the elastic holding portions 12, respectively.

As shown in Fig. 3, shaft body support portions 14 and 14, which are continued to the holding space 13 and extend in a Y1 direction and a Y2 direction, are formed at the first support 10. The dimensions of the widths of openings of the shaft body support portions 14 and 14 in the X1-X2 direction are substantially the same as those of the diameters of the shaft bodies 8 and 8 that are formed at the base molding body 5. Further, each of the shaft body support portions 14 and 14 is formed so as to have a depth several times the diameter of each of the shaft bodies 8 and 8 in the vertical direction (a Z1-Z2 direction) while the dimensions of the widths of the openings of the shaft body support portions 14 and 14 are maintained.

While the first support 10 is not fixed to the second support 20, the lower end portion of the base molding body 5 of the operation lever 1 is mounted on the first support 10 from above. The spherical sliding surface 7 of the base molding body 5 is inserted into the holding space 13 of the first support 10, and the shaft bodies 8 and 8 are inserted into the shaft body support portions 14 and 14, respectively. During the insertion, the spherical sliding surface 7 slides on the respective holding sliding portions 12a of the elastic holding portion 12 and the elastic holding portions 12 are elastically deformed outward so as to be separated from each other. When the spherical sliding surface 7 is mounted in the holding space 13, the holding sliding portions 12a are elastically pressed against the spherical sliding surface 7 above the center 7a of curvature by the elastic force of the elastic holding portions 12. A downward biasing force is applied to the spherical sliding surface 7 by the elastic force, so that the lower portion of the spherical sliding surface 7 comes into close contact with the sliding support portion 11. Since the spherical sliding surface 7 is held by the four elastic holding portions 12 and comes into close contact with the sliding support portion 11, the spherical sliding surface 7 is held by the first support 10 so as to be capable of oscillating without wobbling.

When the spherical sliding surface 7 is held in the holding space 13 and the shaft bodies 8 and 8 are held in the shaft body support portions 14 and 14, the operation lever 1 and the base molding body 5 can oscillate about the axes of the shaft bodies 8 and 8, that is, the second axis Y0 in the second direction (the X1-X2 direction: the β direction). Further, when the shaft bodies 8 and 8 are moved in the shaft body support portions 14 and 14 so as to fall in the vertical direction (the Z1-Z2 direction), the operation lever 1 and the base molding body 5 can oscillate about the first axis X0, which passes through the center 7a of curvature, in the first direction (the Y1-Y2 direction: the α direction).

The center 7a of curvature of the spherical sliding surface 7 is the center of oscillation in regard to both the oscillation in the first direction and the oscillation in the second direction.

While the base molding body 5 of the operation lever 1 is held by the first support 10, the first support 10 is inserted into the body 21 of the second support 20 from above. The second support 20 is made of a synthetic resin.

As shown in Fig. 3, four partition portions 22, which extend in the vertical direction, are formed integrally with the bottom of the second support 20. Opposite surfaces of the respective partition portions 22 are formed in a concave shape, and a space surrounded by the four partition portions 22 is a cylindrical space extending in the vertical direction. Further, support walls 23 and 23, which are continued to the partition portions 22 and extend parallel to the Y1 direction, and support walls 23 and 23, which extend parallel to the Y2 direction, are integrally formed. As shown in Figs. 3 and 4, a locking protrusion 24 is formed integrally with the outer surface of each of the four partition portions 22.

As shown in Figs. 3 and 4, elastic mounting portions 15 are integrally formed at four positions on the outer periphery of the first support 10. The respective elastic mounting portions 15 are provided on the outer peripheral sides of the elastic holding portions 12 at regular intervals so as to face each other. An upper end of each elastic mounting portion 15 is formed integrally with the first support 10, each elastic mounting portion 15 extends downward, and a lower end portion of each elastic mounting portion 15 can be elastically deformed toward the inner periphery and the outer periphery. A locking hole 15a is opened at each elastic mounting portion 15.

When the first support 10, which holds the base molding body 5, is inserted up to the bottom of the second support 20 as shown in Fig. 4, the sliding support portion 11 of the first support 10 and the four elastic holding portions 12 are mounted in the cylindrical space that is surrounded by the four partition portions 22 of the second support 20. Further, the shaft body support portions 14 and 14 of the first support 10 are inserted between the parallel support walls 23 and 23 of the second support 20.

In this case, the respective elastic holding portions 12 of the first support 10 come into close contact with the inside of the partition portions 22 formed at the second support 20, the elastic mounting portions 15 of the first support 10 come into close contact with the outer surfaces of the respective partition portions 22, and the locking holes 15a formed at the elastic mounting portions 15 are locked to the locking protrusions 24 protruding from the outer surfaces of the partition portions 22. Accordingly, the first support 10 is positioned and supported in the second support 20.

When the first support 10 is mounted on the bottom of the second support 20 while the spherical sliding surface 7 is held by the elastic holding portions 12 as shown in Fig. 4, the outer surfaces of the elastic holding portions 12 come into close contact with the partition portions 22 of the second support 20 and the elastic holding portions 12 cannot be elastically deformed outward. For this reason, the spherical sliding surface 7 is firmly held in the holding space 13 of the first support 10 and cannot be pulled out in the vertical direction.

As shown in Fig. 3, the third support 30 is made of a synthetic resin. The third support 30 includes a bottom plate portion 31 that closes the bottom opening of the body 21 of the second support 20, side plate portions 32 and 32 that stand up from edge portions of long sides of the bottom plate portion 31, and locking side plate portions 33 and 33 that stand up from edge portions of short sides of the bottom plate portion 31. Locking holes 33a are opened at the locking side plate portions 33 and 33. As shown in Figs. 1 and 3, locking protrusions 25 are integrally formed on the narrow outer surfaces of the body 21 of the second support 20.

When the third support 30 is mounted on the bottom of the second support 20 as shown in Fig. 1, the bottom opening of the body 21 is covered with the bottom plate portion 31. The side plate portions 32 and 32 and the locking side plate portions 33 and 33 come into close contact with the outer surfaces of the body 21 of the second support 20 and the locking protrusions 25 are fitted to the locking holes 33a, so that the second support 20 and the third support 30 are positioned.

Four regulating protrusions 34, which protrude upward from the bottom plate portion 31, are integrally formed on the third support 30 as shown in Fig. 3. As shown in Fig. 4, when the third support 30 is mounted on the bottom of the second support 20 after the first support 10 holding the spherical sliding surface 7 is mounted on the bottom of the second support 20, the regulating protrusions 34 are inserted into the body 21 of the second support 20. Further, the regulating protrusions 34 are interposed between the elastic mounting portions 15 of the first support 10 and the body 21 of the second support 20 so as to come into close contact with the elastic mounting portions 15 and the body 21 and the deformation of the elastic mounting portions 15 is regulated, so that the locking holes 15a are separated from the locking protrusions 24. Accordingly, the first support 10 cannot be separated upward from the bottom of the second support 20.

In the position detecting device according to this embodiment, first, the spherical sliding surface 7 of the base molding body 5, which is formed at the base of the operation lever 1, is mounted in the holding space 13 of the first support 10 and the spherical sliding surface 7 is held by the elastic holding portions 12. After that, the first support 10 is inserted into the body 21 of the second support 20 and is mounted on the bottom of the second support 20. Moreover, the third support 30 is mounted on the bottom of the second support 20, and the second and third supports 20 and 30 are fixed to each other by screwing, fixing pins, or the like. In a series of assembling work, as shown in Fig. 4, the first support 10 cannot be pulled out of the second support 20 and the spherical sliding surface 7 cannot be pulled out of the first support 10.

Further, since the guide member 40 is fixed to the upper opening of the second support 20 and the operation lever 1 is inserted into the guide hole 41, the operation lever 1 is adapted to be capable of oscillating (being tilted) inside the first housing in the first direction and the second direction along a guide direction of the guide hole 41.

An opening 26 is formed at a part of the body 21 of the second support 20 as shown in Fig. 3, and a second housing 60 is fixed to the outside of the body 21 at a portion at which the opening 26 is not formed as shown in Fig. 1.

As shown in Fig. 1, a support wall portion 61 is formed integrally with the second housing 60 and components forming a detection mechanism 50 shown in Figs. 2 and 3 are received inside the support wall portion 61.

As shown in Fig. 2, the detection mechanism 50 includes the support member 51 and the driven member 53.

The support member 51 is provided with a support protrusion 51a that supports the driven member 53 so as to allow the driven member 53 to be capable of rotating in the Y-Z direction and linearly moving in the Z1-Z2 direction.

Further, arc-shaped guide holes 51b1 and 51 b2, into which protrusions 55b1 and 55b2 of the first and second rotors 551 and 552 are inserted and which guide the protrusions 55b1 and 55b2, are formed at the support member 51. The first and second rotors 551 and 552 are provided so as to be symmetrical with respect to a center axis passing through the support protrusion 51 a.

As shown in Fig. 2, the support member 51 and the driven member 53 are disposed so as to overlap each other in the X1-X2 direction.

The driven member 53 is supported so as to be guided by the support protrusion 51 a of the support member 51 and so as to be capable of linearly moving in the vertical direction (an H direction). Specifically, a linear guide hole 53a, which extends in the H direction, is formed in the middle portion of the driven member 53. The support protrusion 51 a of the support member 51 is inserted into the linear guide hole 53a, and the driven member 53 slides on the support member 51 in the H direction by an engagement relationship between the linear guide hole 53a and the support protrusion 51 a.

The linear movement direction of the driven member 53 (the H direction) is a direction crossing the rotation direction of the driven member 53 (a γ direction), and the linear movement direction (the H direction) is parallel to the axis of the operation lever 1 that is at the home position (1) and vertically stands up from the bottom plate portion 31 shown in Fig. 4.

A connecting recess 53c, which is opened in an X1 direction, is formed at the driven member 53. A driving body 9, which extends in a direction orthogonal to the axial direction of the operation lever 1, is formed integrally with the base molding body 5, and a connecting projection 9a is integrally formed at an end portion of the driving body 9. The connecting projection 9a is inserted into the connecting recess 53c with no gap, and the connecting projection 9a is fitted to the connecting recess 53c so as to be capable of moving in a three-dimensional direction inside the connecting recess 53c. Meanwhile, the connecting projection 9a may be formed integrally with the driven member 53, and the connecting recess 53c may be formed integrally with the driving body 9.

Two linear guide holes 53b1 and 53b2, which extend in the Y1 direction and the Y2 direction orthogonal to the linear guide hole 53a, are formed at symmetrical positions in the driven member 53.

The protrusions 55b1 and 55b2 of the first and second rotors 551 and 552 are inserted into the linear guide holes 53b1 and 53b2 through the arc-shaped guide holes 51b1 and 51 b2 of the support member 51, respectively. Accordingly, when the driven member 53 is moved in the vertical direction (the H direction) and is rotated in the γ direction, the inner walls of the linear guide holes 53b1 and 53b2 press the protrusions 55b1 and 55b2 of the first and second rotors 551 and 552. Therefore, the first and second rotors 551 and 552 are rotated so as to follow the driven member 53.

While the support member 51 and the driven member 53 are mounted on the inner surface of the support wall portion 61 of the second housing 60, the second housing 60 is installed on the outer surface of the body 21 of the second support 20 and the body 21, which is a part of the first housing, and the second housing 60 are fixed to each other by mounting screws or the like. In this case, a portion where the driven member 53 and the driving body 9 are fitted to each other is positioned in the opening 26 of the body 21 of the second support 20.

Since the shaft bodies 8 and 8 of the base molding body 5, which is formed at the base of the operation lever 1, are held in the shaft body support portions 14 and 14 of the first support 10 that extend in the first direction (the Y1-Y2 direction: the α direction), the operation lever 1 can oscillate only in the first direction about the first axis X0 and in the second direction (the X1-X2 direction: the β direction) about the second axis Y0 and the rotation of the operation lever 1 in other directions is regulated.

When the operation lever 1 oscillates about the first axis X0 in the first direction, the force of the operation lever 1 is transmitted to the driven member 53 from the driving body 9 and the driven member 53 is rotated in the γ direction. However, in this case, the movement of the driven member 53 is determined by an engagement relationship between the protrusions 55b1 and 55b2 and the linear guide holes 53b1 and 53b2 and an engagement relationship between the support protrusion 51a and the linear guide hole 53a.

Since the operation lever 1 is guided by the guide hole 41 of the guide member 40 shown in Fig. 1, the operation lever 1 can oscillate about the second axis Y0 in the second direction only when being moved between the operating positions (1) and (2). That is, only when the operation lever 1 is at a neutral position of oscillating in the first direction (the Y1-Y2 direction: the α direction), the operation lever 1 can oscillate in the second direction (the X1-X2 direction: the β direction).

Since the driven member 53 is set to a neutral position of rotation in the γ direction when the operation lever 1 is oscillated in the second direction between the operating positions (1) and (2), the linear guide hole 53a of the driven member 53 is parallel to the vertical direction, that is, the linear movement direction of the driven member 53 (the H direction). When the operation lever 1 is rotated in the second direction, the driven member 53 can be moved in the vertical direction by the driving body 9.

As shown in Fig. 2, the detection mechanism 50 is provided with the first and second rotors 551 and 552. Shaft portions 55a1 and 55a2 are formed integrally with the first and second rotors 551 and 552, and the shaft portions 55a1 and 55a2 are rotatably supported by fixing holes 51c1 and 51c2 of the support member 51 provided in the second housing 60.

Center lines of rotation, which are the axes of the shaft portions 55a1 and 55a2 of the first and second rotors 551 and 552, are also parallel to the X1-X2 direction.

When the driven member 53 is moved in the vertical direction, a linear moving force is converted into the rotation of the first and second rotors 551 and 552 through the support member 51 and the driven member 53 and the first and second rotors 551 and 552 are rotated in synchronization with each other.

As shown in Fig. 2, magnet holding portions 55c1 and 55c2 are formed on opposite portions of the first and second rotors 551 and 552 facing the X2 side, respectively. As shown in Fig. 1, the magnet holding portions 55c1 and 55c2 formed on the first and second rotors 551 and 552 appear on the outer surface of the support wall portion 61 of the second housing 60, and the respective magnet holding portions 55c1 and 55c2 face the X2 direction.

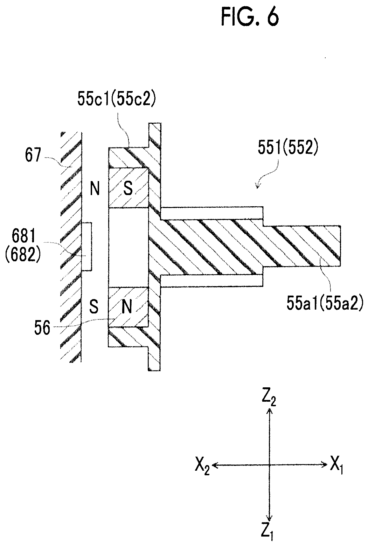

As shown in Fig. 6, magnets 56 are hold by the magnet holding portions 55c1 and 55c2 of the first and second rotors 551 and 552. The opposite surfaces of the magnets 56, which face the X2 side, are magnetized with different magnetic poles, that is, an N pole and an S pole in normal directions (diametrical directions) of the first and second rotors 551 and 552. Although not shown in Fig. 1, a fixed board 67, which is a fixed part parallel to the support wall portion 61, is fixed to the second housing 60 at a position away from the support wall portion 61 in the X2 direction. As shown in Fig. 6, the detection units 681 and 682 facing the magnets 56 are disposed on the fixed board 67.

Each of the detection units 681 and 682 is a large magnetoresistance effect element, and includes a fixed magnetic layer of which magnetization is fixed and a free magnetic layer of which magnetization direction is rotated so as to follow the change of an external magnetic field. The electrical resistance of each of the detection units 681 and 682 is changed according to an angle between the fixed magnetization direction of the fixed magnetic layer and the magnetization direction of the free magnetic layer. As shown in Fig. 6, the detection units 681 and 682 face the rotation centers of the first and second rotors 551 and 552. Since the direction of a leakage magnetic field from the N pole of the magnet 56 to the S pole thereof is changed when each of the first and second rotors 551 and 552 is rotated, the magnetization direction of the free magnetic layer is rotated so as to follow the direction of the leakage magnetic field. As a result, the resistance values of the detection units 681 and 682 are changed. The detection units 681 and 682 output detection signals, which represent detection results (resistance values), to the determination unit 71 shown in Fig. 2.

The determination unit 71 detects the rotation angles of the first and second rotors 551 and 552 on the basis of the detection signals output from the detection units 681 and 682, and determines the position of the operation lever 1 on the basis of the rotation angles.

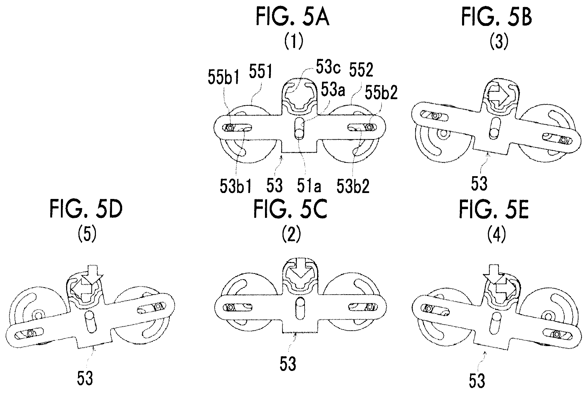

Fig. 5 is a view showing the postures of the driven member 53, the first rotor 551, and the second rotor 552 at the operating positions (1) to (5) of the operation lever 1 shown in Fig. 1.

As shown in Fig. 5, the arc-shaped guide holes 51b1 and 51b2 of the driven member 53 are present at rotational positions on the rotation loci corresponding to the position of the operation lever 1 in the Y1-Y2 direction (the first direction) and linear positions on the linear loci corresponding to the position of the operation lever 1 in the X1-X2 direction (the second direction).

The driven member 53 is in a posture unique to the rotational positions on the rotation loci and linear positions on the linear loci of the arc-shaped guide holes 51b1 and 51b2.

Further, the protrusions 55b1 and 55b2 of the first and second rotors 551 and 552 are disposed at rotational positions unique to the positions of the arc-shaped guide holes 51b1 and 51b2 of the driven member 53. For this reason, the determination unit 71 detects the rotation angles of the first and second rotors 551 and 552 on the basis of the detection signals S681 and S682 output from the detection units 681 and 682, and can determine the operating positions (1) to (5) shown in Fig. 1 on the basis of the rotation angles.

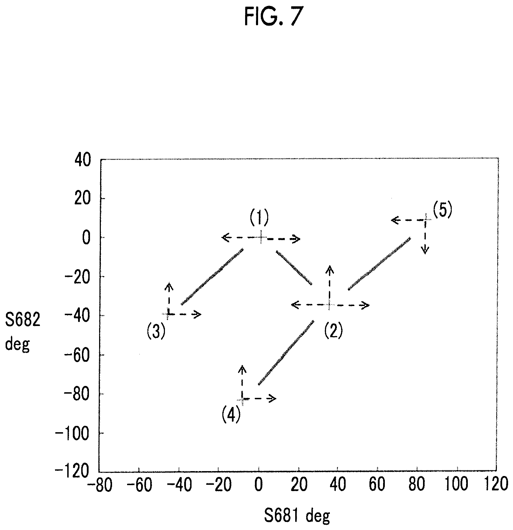

Fig. 7 is a view illustrating the detection signals S681 and S682 output from the detection units 681 and 682.

As described above, in the detection mechanism 50, the operation lever 1 rotates the first and second rotors 551 and 552 so that the first and second rotors 551 and 552 follow the oscillation of the operation lever 1 in either direction of the first and second directions. For this reason, as shown in Fig. 7, both the detection signals S681 and S682 are changed when the operating positions (1) to (5) are switched. Accordingly, when only one of the detection signals S681 and S682 is changed, the determination unit 71 can determine that the detection unit 681 or 682 corresponding to the unchanged detection signal is out of order.

Further, as shown in Fig. 7, in the detection mechanism 50, values of combinations of the detection signals S681 and S682 corresponding to the operating positions (1) to (5) are different from each other. For this reason, the determination unit 71 can uniquely specify the position of the operation lever 1 on the basis of the detection signals S681 and S682.

Next, the detection operation of the position detecting device will be described.

When an operating position is to be switched to the position (3) from the home position (1), the operation lever 1 present at the home position (1) is oscillated in the Y1 direction that is the first direction. In this operation, the driven member 53 is not moved and is rotated in the α direction by the oscillation of the base molding body 5 in the Y1 direction. Accordingly, the first and second rotors 551 and 552 are rotated in ϕ2 directions by the driven member 53. The rotation of a magnetic field is detected by the detection units 681 and 682 that face the rotors 551 and 552. When the rotation angle of the magnetic field reaches a predetermined range, it is determined that an operating position is switched to the operating position (3).

When an operating position is to be switched to the position (4) from the home position (1), the operation lever 1 present at the home position (1) is oscillated in the X2 direction, which is the second direction, so as to be moved to the position (2) and is then oscillated in the Y1 direction, which is the first direction, so as to be moved to the position (4).

When the operation lever 1 is oscillated in the X2 direction, the driven member 53 is moved down by the driving body 9. In this case, the driven member 53 is moved down without being rotated, the first rotor 551 is rotated in a ϕ1 direction, and the second rotor 552 is rotated in the ϕ2 direction. The rotation of a magnetic field is detected by the detection units 681 and 682 that face the first and second rotors 551 and 552. When the rotation angle of the magnetic field reaches a predetermined range, it is determined that an operating position is switched to the operating position (2). Further, when the operation lever 1 is tilted in the Y1 direction and reaches the position (4), the driven member 53 is rotated in the γ direction. In this case, the rotation of the first and second rotors 551 and 552 in the ϕ2 direction is detected, so that the switching of the operating position to the position (4) is detected.

When the operation lever 1 is to be switched to the position (5) from the home position (1), the operation lever 1 is moved to the position (2) and then moved to the position (5). In this operation, the first rotor 551 and the second rotor are rotated in the ϕ2 direction together with each other at first and are then rotated in the ϕ1 direction. It is possible to detect the selection of the position (5) by detecting the rotation angles of the first and second rotors 551 and 552.

As described above, according to the position detecting device of this embodiment, the detection mechanism 50 is formed as shown in Fig. 2. Accordingly, when the two first and second rotors 551 and 552 are used, the movement of the operation lever 1 in the first and second directions can be detected.

Further, according to this embodiment, the first and second rotors 551 and 552 are rotated so as to follow the oscillation of the operation lever 1 in either direction of the first and second directions. According to this structure, when the operating positions (1) to (5) are switched, both the detection signals S681 and S682 of detection units 681 and 682 are changed as shown in Fig. 7. For this reason, when only one of the detection signals S681 and S682 is changed, the determination unit 71 can determine that the detection unit 681 or 682 corresponding to the unchanged detection signal is out of order. Accordingly, since the numbers of rotors and detection units can be reduced in half as compared to the related art, the position detecting device can be reduced in size and price.

Furthermore, according to this embodiment, as shown in Fig. 7, in the detection mechanism 50, the values of combinations of the detection signals S681 and S682 corresponding to the operating positions (1) to (5) are different from each other. For this reason, the determination unit 71 can uniquely specify the position of the operation lever 1 on the basis of the detection signals S681 and S682.

Moreover, according to this embodiment, it is possible to detect the selection of the operating position by the combination of the rotation angles of the first and second rotors 551 and 552. Since the detection units 681 and 682 detect the rotation of a magnetic field and do not detect the intensity of the magnetic field, the detection operations of the detection units do not interfere even though the first and second rotors 551 and 552 are disposed close to the detection units.

Further, since the rotation of a magnetic field has only to be capable of being detected, expensive magnets having a large coercive force do not need to be used as the magnets held by the first and second rotors 551 and 552.

Furthermore, when the oscillating angle of the operation lever 1, the number of operating positions, or the operating positions are changed due to the change in the specifications of a product, it is possible to cope with the change by only replacing the guide member 40. In this case, the oscillating angle of the operation lever, which is obtained at the time of the selection of a position, is changed, but the change of the oscillating angle merely appears as a change in the rotation angles of the first and second rotors 551 and 552. Accordingly, it is possible to cope with the change of the specifications by only changing electrical treating based on detection outputs that are output from the detection units 681 and 682.

### Second embodiment

A position detecting device according to a second embodiment of the invention will be described below.

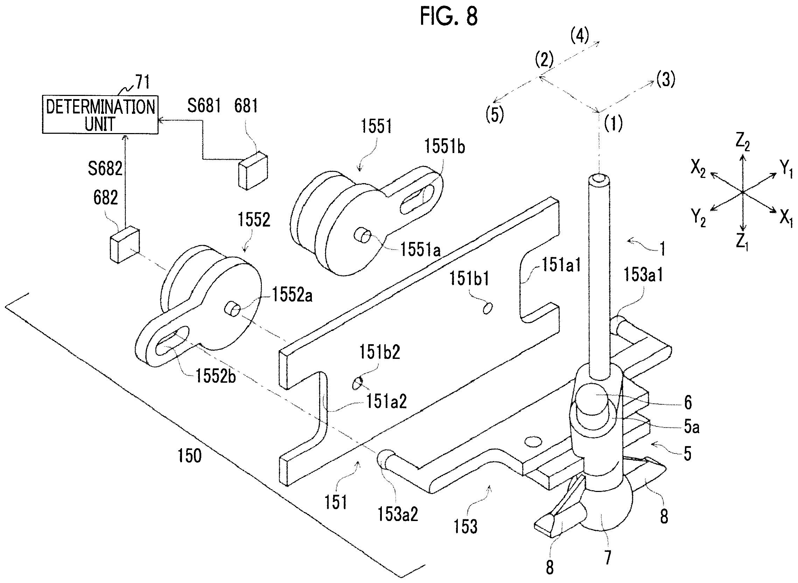

Fig. 8 is an exploded perspective view showing the internal structure of the position detecting device according to the second embodiment of the invention.

As shown in Fig. 8, a detection mechanism 150 of the position detecting device according to this embodiment includes a support member 151 and a driven member 153 that is fixed to a base molding body 105.

As shown in Fig. 8, the support member 151 and the driven member 153 are disposed so as to overlap each other in an X1-X2 direction.

The driven member 153 includes protrusions 153a1 and 153a2, and the protrusions 153a1 and 153a2 are inserted into (engaged with) linear guide holes 1551 b and 1552b of first and second rotors 1551 and 1552 through notches 151a1 and 151a2 of the support member 151. In this case, engagement positions where the protrusions 153a1 and 153a2 are engaged with the linear guide holes 1551 b and 1552b can be moved in linear directions of the linear guide holes 1551 b and 1552b.

As shown in Fig. 8, the detection mechanism 150 is provided with the first and second rotors 1551 and 1552. Shaft portions 1551 a and 1552a are formed integrally with the first and second rotors 1551 and 1552, and the shaft portions 1551 a and 1552a are rotatably supported by fixing holes 151b1 and 151b2 of the support member 151 provided in a second housing 60.

Center lines of rotation, which are the axes of the shaft portions 1551a and 1552a of the first and second rotors 1551 and 1552, are also parallel to the X1-X2 direction.

In the position detecting device, the protrusions 153a1 and 153a2 of the driven member 153 are rotated so as to follow the oscillation of the operation lever 1 in the first direction (the Y1-Y2 direction) and the second direction (the X1-X2 direction).

Further, the protrusions 153a1 and 153a2 are disposed at positions, which correspond to the positions of the operation lever 1 in the first direction (the Y1-Y2 direction) and the second direction (the X1-X2 direction), in the X direction and the Y direction.

The protrusions 153a1 and 153a2 are moved in the X direction and the Y direction so as to follow the movement of the operation lever 1 in the first and second directions. Further, since the protrusions 153a1 and 153a2 follow the movement of the operation lever 1, torque is applied to the linear guide holes 1551 b and 1552b and the first and second rotors 1551 and 1552 are rotated.

The rotational positions of the first and second rotors 1551 and 1552 are detected by the detection units 681 and 682, respectively, as in the cases of the first and second rotors 551 and 552 of the first embodiment.

The same effects as the first embodiment are also obtained from the position detecting device according to the second embodiment.

The invention is not limited to the above-mentioned embodiments.

That is, those skilled in the art may make various modifications, combinations, sub-combinations, and substitutions of the components of the above-mentioned embodiments within the technical range of the invention or the equivalent range thereof.

In the above-mentioned embodiments, the operation lever 1, which is used to switch the travel mode of an automobile, has been exemplified as an operation body of the invention. However, the operation body is not particularly limited to the operation lever as long as the operation body oscillates in the first and second directions.

Cases in which the detection units 681 and 682 detect the angles of the first and second rotors 551 and 552 by using the change of electrical resistance have been exemplified in the above-mentioned embodiments, but contact type detection means may be used other than noncontact type detection means for detecting an angle on the basis of the change of capacitance.

The invention can be applied to a system that detects a position for the switching and the like of a travel mode of an automobile.

It should be understood by those skilled in the art that various modifications, combinations, sub-combinations and alterations may occur depending on design requirements and other factors insofar as they are within the scope of the appended claims.

## Claims

1. A position detecting device that detects an oscillating position of an operation body (1) supported so as to be capable of oscillating in a first direction and a second direction, the position detecting device comprising:
a driven member (53) that is moved so as to follow oscillation of the operation body (1) in the first and the second directions;
a first rotor (551) and a second rotor (552) that are rotated so as to follow the driven member (53); and
detection units (681, 682) that detect the respective rotation of the first and second rotors (551, 552),
wherein the driven member (53) rotates both the first and second rotors (551, 552) so as to follow the oscillation of the operation body (1) in either direction of the first and second directions.

2. The position detecting device according to claim 1,
wherein the driven member (53) includes a first engaging portion and a second engaging portion that are moved so as to follow the oscillation of the operation body (1) in the first and second directions,
the first rotor (551) includes a third engaging portion that is engaged with the first engaging portion and is rotated by torque applied to the third engaging portion from the first engaging portion,
the second rotor (552) includes a fourth engaging portion that is engaged with the second engaging portion and is rotated by torque applied to the fourth engaging portion from the second engaging portion, and
the first and second rotors (551, 552) are rotated so as to follow the oscillation of the operation body (1) in both the first and second directions.

3. The position detecting device according to claim 2,
wherein the first and second engaging portions apply torque to portions thereof, which are engaged with the third and fourth engaging portions, so as to follow the oscillation of the operation body (1) in both the first and second directions.

4. The position detecting device according to claim 3,
wherein the first and second engaging portions are rotated along rotation loci so as to follow the oscillation of the operation body (1) in the first direction, and are linearly moved along linear loci so as to follow the oscillation of the operation body (1) in the second direction,
the first and second engaging portions are disposed at rotational positions, which correspond to the position of the operation body (1) in the first direction, on the rotation loci and linear positions, which correspond to the position of the operation body (1) in the second direction, on the linear loci,
the driven member (53) is in a posture unique to the rotational positions and the linear positions of the first and second engaging portions, and
the first and second rotors (551, 552) are disposed at rotation angles unique to the posture of the driven member (53).

5. The position detecting device according to claim 4, further comprising:
a support member (51) that supports the driven member (53) so that the driven member (53) is rotatable and linearly movable relative to the first and second rotors (551, 552) in a direction orthogonal to rotation axes of the first and second rotors (551, 552),
wherein the driven member (53) is engaged with a driving body (9) extending from the operation body (1),
the driven member (53) includes a guide portion that guides the movement of the driven member (53) relative to the support member (51) along the linear loci while the driven member (53) is rotatable in the direction orthogonal to the rotation axes,
the first and second engaging portions are positioned so as to be line-symmetric with respect to the guide portion,
the first engaging portion is engaged with the third engaging portion so that an engagement position where the first engaging portion and the third engaging portion are engaged with each other is movable in the direction orthogonal to the rotation axes, and
the second engaging portion is engaged with the fourth engaging portion so that an engagement position where the second engaging portion and the fourth engaging portion are engaged with each other is movable in the direction orthogonal to the rotation axes.

6. The position detecting device according to claim 3,
wherein the first and second engaging portions are rotated so as to follow the oscillation of the operation body (1) in the first and second directions,
the first and second engaging portions are disposed at positions, which correspond to the positions of the operation body (1) in the first and second directions, in the direction orthogonal to the rotation axes,
the first engaging portion is capable of moving an engagement position where the first engaging portion and the third engaging portion are engaged with each other in the direction orthogonal to the rotation axes, and rotates the first rotor (551) so that the third engaging portion follows the movement of the first engaging portion in the direction orthogonal to the rotation axes, and
the second engaging portion is capable of moving an engagement position where the second engaging portion and the fourth engaging portion are engaged with each other in the direction orthogonal to the rotation axes, and rotates the second rotor (552) so that the fourth engaging portion follows the movement of the second engaging portion in the direction orthogonal to the rotation axes.

7. The position detecting device according to any one of claims 1 to 6, further comprising:
determination means for determining the position of the operation body (1) on the basis of detection signals (S681, S682) output from the detection units (681, 682).

8. The position detecting device according to any one of claims 1 to 7,
wherein the first and second rotors (551, 552) are supported so that rotation centers of the first and second rotors (551, 552) are parallel to each other, and a fixed part including the detection units (681, 682) faces both the first and second rotors (551, 552), and
magnets, which are magnetized with different magnetic poles in a direction normal to the rotation of the first and second rotors (551, 552), are provided on one of the first and second rotors (551, 552) and the fixed part facing the first and second rotors (551, 552), and magnetism detection units, which detect the rotation of the magnets, are disposed on the other thereof.

## Patentansprüche

1. Positionsdetektionsvorrichtung, die eine Schwingungsposition eines Betätigungskörpers (1) detektiert, der derart gelagert ist, dass er in einer ersten Richtung und einer zweiten Richtung schwingen kann, wobei die Positionsdetektionsvorrichtung Folgendes aufweist:
ein angetriebenes Element (53), das derart bewegt wird, dass es der Schwingungsbewegung des Betätigungskörpers (1) in der ersten und der zweiten Richtung folgt;
einen ersten Rotor (551) und einen zweiten Rotor (552), die derart rotationsmäßig bewegt werden, dass sie dem angetriebenen Element (53) folgen; und
Detektionseinheiten (681, 682), die die jeweilige Rotationsbewegung des ersten und des zweiten Rotors (551, 552) detektieren,
wobei das angetriebene Element (53) sowohl den ersten als auch den zweiten Rotor (551, 552) derart rotationsmäßig bewegt, dass diese der Schwingungsbewegung des Betätigungskörpers (1) in beiden Richtungen von der ersten und der zweiten Richtung folgen.

2. Positionsdetektionsvorrichtung nach Anspruch 1,
wobei das angetriebene Element (53) einen ersten Eingriffsbereich und einen zweiten Eingriffsbereich aufweist, die derart bewegt werden, dass sie der Schwingungsbewegung des Betätigungskörpers (1) in der ersten und zweiten Richtung folgen,
wobei der erste Rotor (551) einen dritten Eingriffsbereich aufweist, der mit dem ersten Eingriffsbereich zusammenwirkt und durch ein Drehmoment rotationsmäßig bewegt wird, das von dem ersten Eingriffsbereich auf den dritten Eingriffsbereich aufgebracht wird,
wobei der zweite Rotor (552) einen vierten Eingriffsbereich aufweist, der mit dem zweiten Eingriffsbereich zusammenwirkt und durch ein Drehmoment rotationsmäßig bewegt wird, das von dem zweiten Eingriffsbereich auf den vierten Eingriffsbereich aufgebracht wird, und
wobei der erste und der zweite Rotor (551, 552) derart rotationsmäßig bewegt werden, dass sie der Schwingungsbewegung des Betätigungskörpers (1) sowohl in der ersten als auch in der zweiten Richtung folgen.

3. Positionsdetektionsvorrichtung nach Anspruch 2,
wobei der erste und der zweite Eingriffsbereich Drehmoment auf Bereiche davon aufbringen, die mit dem dritten und dem vierten Eingriffsbereich zusammenwirken, so dass sie der Schwingungsbewegung des Betätigungskörpers (1) sowohl in der ersten als auch in der zweiten Richtung folgen.

4. Positionsdetektionsvorrichtung nach Anspruch 3,
wobei der erste und der zweite Eingriffsbereich entlang von Rotationsorten rotationsmäßig bewegt werden, so dass sie der Schwingungsbewegung des Betätigungskörpers (1) in der ersten Richtung folgen, sowie entlang von linearen Orten bewegt werden, so dass sie der Schwingungsbewegung des Betätigungskörpers (1) in der zweiten Richtung folgen,
wobei der erste und der zweite Eingriffsbereich in Rotationspositionen, die der Position des Betätigungskörpers (1) in der ersten Richtung entsprechen, an den Rotationsorten angeordnet sind sowie in linearen Positionen, die der Position des Betätigungskörpers (1) in der zweiten Richtung entsprechen, an den linearen Orten angeordnet sind,
wobei sich das angetriebene Element (53) in einer für die Rotationspositionen und die linearen Positionen des ersten und des zweiten Eingriffsbereichs eindeutigen Haltung befindet, und
wobei der erste und der zweite Rotor (551, 552) in Rotationswinkeln angeordnet sind, die für die Haltung des angetriebenen Elements (53) eindeutig sind.

5. Positionsdetektionsvorrichtung nach Anspruch 4,
weiterhin aufweisend:
ein Abstützelement (51), das das angetriebene Element (53) derart abstützt, dass das angetriebene Element (53) relativ zu dem ersten und dem zweiten Rotor (551, 552) drehbar und in einer Richtung orthogonal zu den Rotationsachsen des ersten und des zweiten Rotors (551, 552) linear bewegbar ist,
wobei das angetriebene Element (53) mit einem sich von dem Betätigungskörper (1) weg erstreckenden Antriebskörper (9) zusammenwirkt,
wobei das angetriebene Element (53) einen Führungsbereich aufweist, der die Bewegung des angetriebenen Elements (53) relativ zu dem Abstützelement (51) entlang der linearen Orte führt, während das angetriebene Element (53) in der Richtung orthogonal zu den Rotationsachsen drehbar ist,
wobei der erste und der zweiten Eingriffsbereich derart positioniert sind, dass sie in Bezug auf den Führungsbereich liniensymmetrisch sind,
wobei der erste Eingriffsbereich mit dem dritten Eingriffsbereich derart zusammenwirkt, dass eine Eingriffsposition, in der der erste Eingriffsbereich und der dritte Eingriffsbereich zusammenwirken, in der zu den Rotationsachsen orthogonalen Richtung bewegbar ist, und
wobei der zweite Eingriffsbereich mit dem vierten Eingriffsbereich derart zusammenwirkt, dass eine Eingriffsposition, in der der zweite Eingriffsbereich und der vierte Eingriffsbereich zusammenwirken, in der zu den Rotationsachsen orthogonalen Richtung bewegbar ist.

6. Positionsdetektionsvorrichtung nach Anspruch 3,
wobei der erste und der zweite Eingriffsbereich derart rotationsmäßig bewegt werden, dass sie der Schwingungsbewegung des Betätigungskörpers (1) in der ersten und der zweiten Richtung folgen,
wobei der erste und der zweite Eingriffsbereich an den Positionen des Betätigungskörpers (1) in der ersten und der zweiten Richtung entsprechenden Positionen in der Richtung orthogonal zu den Rotationsachsen angeordnet sind,
wobei der erste Eingriffsbereich in der Lage ist, eine Eingriffsposition, in der der erste Eingriffsbereich und der dritte Eingriffsbereich zusammenwirken, in der Richtung orthogonal zu den Rotationsachsen zu bewegen, sowie den ersten Rotor (551) derart rotationsmäßig bewegt, dass der dritte Eingriffsbereich der Bewegung des ersten Eingriffsbereichs in der Richtung orthogonal zu den Rotationsachsen folgt, und
wobei der zweite Eingriffsbereich in der Lage ist, eine Eingriffsposition, in der der zweite Eingriffsbereich und der vierte Eingriffsbereich zusammenwirken, in der Richtung orthogonal zu den Rotationsachsen zu bewegen, sowie den zweiten Rotor (552) derart rotationsmäßig bewegt, dass der vierte Eingriffsbereich der Bewegung des zweiten Eingriffsbereichs in der Richtung orthogonal zu den Rotationsachsen folgt.

7. Positionsdetektionsvorrichtung nach einem der Ansprüche 1 bis 6, weiterhin aufweisend:
eine Bestimmungseinrichtung zum Bestimmen der Position des Betätigungskörpers (1) auf der Basis von Detektionssignalen (S681, S682), die von den Detektionseinheiten (681, 682) abgegeben werden.

8. Positionsdetektionsvorrichtung nach einem der Ansprüche 1 bis 7, wobei der erste und der zweite Rotor (551, 552) derart gelagert sind, dass Rotationszentren des ersten und des zweiten Rotors (551, 552) parallel zueinander sind, und ein die Detektionseinheiten (681, 682) beinhaltender feststehender Teil sowohl dem ersten als auch dem zweiten Rotor (551, 552) zugewandt ist, und
wobei Magneten, die mit unterschiedlichen Magnetpolen in einer Richtung normal zu der Rotationsbewegung des ersten und des zweiten Rotors (551, 552) magnetisiert sind, an einem von dem ersten und dem zweiten Rotor (551, 552) sowie dem dem ersten und dem zweiten Rotor (551, 552) zugewandten feststehenden Teil vorgesehen sind und Magnetismus-Detektionseinheiten, die die Rotationsbewegung der Magnete detektieren, an dem anderen davon angeordnet sind.

## Revendications

1. Dispositif de détection de position qui détecte une position oscillante d'un corps de commande (1) supporté de manière à pouvoir osciller dans un premier sens et un second sens, le dispositif de détection de position comportant :
un élément mené (53) qui est mu de manière à suivre l'oscillation du corps de commande (1) dans le premier et le second sens ;
un premier rotor (551) et un second rotor (552) amenés à tourner de manière à suivre l'élément mené (53) ; et
des unités de détection (681, 682) qui détectent la rotation respective des premier et second rotors (551, 552),
l'élément mené (53) faisant tourner les premier et second rotors (551, 552) de manière à suivre l'oscillation du corps de commande (1) dans n'importe lequel des premier et second sens.

2. Dispositif de détection de position selon la revendication 1,
dans lequel l'élément mené (53) comprend un premier moyen d'enclenchement et un deuxième moyen d'enclenchement qui sont mus de manière à suivre l'oscillation du corps de commande (1) dans les premier et second sens,
le premier rotor (551) comprend un troisième moyen d'enclenchement qui est en prise avec le premier moyen d'enclenchement et est amené à tourner par un couple appliqué au troisième moyen d'enclenchement à partir du premier moyen d'enclenchement,
le second rotor (552) comprend un quatrième moyen d'enclenchement qui est en prise avec le deuxième moyen d'enclenchement et est amené à tourner par un couple appliqué au quatrième moyen d'enclenchement à partir du deuxième moyen d'enclenchement, et
les premier et second rotors (551, 552) sont amenés à tourner de manière à suivre l'oscillation du corps de commande (1) dans les premier et second sens.

3. Dispositif de détection de position selon la revendication 2,
dans lequel les premier et deuxième moyens d'enclenchement appliquent un couple à des parties de celui-ci, lesquelles sont en prise avec les troisième et quatrième moyens d'enclenchement, de manière à suivre l'oscillation du corps de commande (1) dans les premier et second sens.

4. Dispositif de détection de position selon la revendication 3,
dans lequel les premier et deuxième moyens d'enclenchement sont amenés à tourner le long de lieux géométriques de rotation de manière à suivre l'oscillation du corps de commande (1) dans le premier sens, et sont mus linéairement le long de lieux géométriques linéaires de manière à suivre l'oscillation du corps de commande (1) dans le second sens,
les premier et deuxième moyens d'enclenchement sont disposés dans des positions de rotation, lesquelles correspondent à la position du corps de commande (1) dans le premier sens, aux lieux géométriques de rotation? et dans des positions linéaires, lesquelles correspondent à la position du corps de commande (1) dans le second sens, aux lieux géométriques linéaires,
l'élément mené (53) est dans une posture exclusive des positions de rotation et des positions linéaires des premier et deuxième moyens d'enclenchement, et
les premier et second rotors (551, 552) sont disposés suivant des angles de rotation exclusifs de la posture de l'élément mené (53).

5. Dispositif de détection de position selon la revendication 4, comportant en outre :
un élément de support (51) qui soutient l'élément mené (53) de façon que l'élément mené (43) puisse tourner et puisse être mu d'une manière linéaire par rapport aux premier et second rotors (551, 552) perpendiculairement à des axes de rotation des premier et second rotors (551, 552),
l'élément mené (53) étant en prise avec un corps d'entraînement (9) s'étendant depuis le corps de commande (1),
l'élément mené (53) comprenant un moyen de guidage qui guide le mouvement de l'élément mené (53) par rapport à l'élément de support (51) le long des lieux géométriques linéaires tandis que l'élément mené (53) peut tourner perpendiculairement aux axes de rotation,
les premier et deuxièmes moyens d'enclenchement étant placés de manière à présenter une symétrie de lignes par rapport au moyen de guidage,
le premier moyen d'enclenchement étant en prise avec le troisième moyen d'enclenchement de façon qu'une position d'enclenchement dans laquelle le premier moyen d'enclenchement et le troisième moyen d'enclenchement sont en prise l'un avec l'autre soit mobile perpendiculairement aux axes de rotation, et
le deuxième moyen d'enclenchement étant en prise avec le quatrième moyen d'enclenchement de façon qu'une position d'enclenchement dans laquelle le deuxième moyen d'enclenchement et le quatrième moyen d'enclenchement sont en prise l'un avec l'autre soit mobile perpendiculairement aux axes de rotation.

6. Dispositif de détection de position selon la revendication 3,
dans lequel les premier et deuxième moyens d'enclenchement sont amenés à tourner de manière à suivre l'oscillation du corps de commande (1) dans les premier et second sens,
les premier et deuxième moyens d'enclenchement sont disposés dans des positions de rotation, lesquelles correspondent aux positions du corps de commande (1) dans les premier et second sens, perpendiculairement aux axes de rotation,
le premier moyen d'enclenchement pouvant déplacer une position d'enclenchement dans laquelle le premier moyen d'enclenchement et le troisième moyen d'enclenchement sont en prise l'un avec l'autre perpendiculairement aux axes de rotation, et faisant tourner le premier rotor (551) de façon que le troisième moyen d'enclenchement suive le mouvement du premier moyen d'enclenchement perpendiculairement aux axes de rotation, et
le deuxième moyen d'enclenchement pouvant déplacer une position d'enclenchement dans laquelle le deuxième moyen d'enclenchement et le quatrième moyen d'enclenchement sont en prise l'un avec l'autre perpendiculairement aux axes de rotation, et faisant tourner le second rotor (552) de façon que le quatrième moyen d'enclenchement suive le mouvement du deuxième moyen d'enclenchement perpendiculairement aux axes de rotation.

7. Dispositif de détection de position selon l'une quelconque des revendications 1 à 6, comportant en outre :
un moyen de détermination pour déterminer la position du corps de commande (1) d'après des signaux de détection (S681, S682) délivrés par les unités de détection (681, 682).

8. Dispositif de détection de position selon l'une quelconque des revendications 1 à 7,
dans lequel les premier et second rotors (551, 552) sont supportés de façon que des centres de rotation des premier et second rotors (551, 552) soient parallèles l'un à l'autre, et qu'une partie fixe comprenant les unités de détection (681, 682) soit en regard des premier et second rotors (551, 552), et
des aimants, magnétisés avec différents pôles magnétiques dans une direction normale à la rotation des premier et second rotors (551, 552), sont disposés sur l'un des premier et second rotors (551, 552) et la partie fixe en regard des premier et second rotors (551, 552), et des unités de détection de magnétisme, qui détectent la rotation des aimants, sont disposés sur l'autre de ceux-ci.
